# DEMANDE DE BREVET EUROPEEN

(11) **EP 4 729 875 A1**
(43) Date de publication de la demande: **22.04.2026**
(21) Numéro de dépôt: 25207819.1
(22) Date de dépôt: 09.10.2025
(51) Int. Cl.: F41G 7/00, G01S 7/40, G01S 7/497, G01S 13/74

(54) **PROCÉDÉ ET SYSTÈME D'ÉMISSION D'UN SIGNAL COOPÉRATIF SIMULÉ, EN PARTICULIER UN SIGNAL D'IDENTIFICATION AMI SIMULÉ, ET APPLICATIONS**

(30) Priorité: 15.10.2024 FR 2411113
(71) Demandeur: MBDA France, 92350 Le Plessis-Robinson (FR)
(72) Inventeur: LE LOUËT, Florian, 92350 Le Plessis-Robinson (FR); BOUDAUD, Alexis, 92350 Le Plessis-Robinson (FR)
(74) Mandataire: Gevers & Orès

(57) **Abrégé**

- Procédé et système d'émission d'un signal coopératif simulé, en particulier un signal d'identification ami simulé, et applications.
- Le système (1) comporte au moins un drone (3A) et un dispositif (4) de génération de signal monté sur le drone (3A) et configuré pour générer un signal coopératif simulé, par exemple un signal dit IFF simulé (S2), qui représente un signal, par exemple d'identification ami, censé être émis par une cible aérienne (2A), ledit système (1) étant ainsi particulièrement approprié pour faire partie d'un système (50) de simulation de cibles aériennes (2A) et d'un système de test (51) destiné à tester un système de surveillance (52) multi-senseur hétérogène.

## Description

### Domaine technique

La présente invention concerne un procédé et un système d'émission d'un signal coopératif simulé, en particulier un signal d'identification ami simulé, ainsi qu'une méthode et un système de simulation d'au moins une cible aérienne, comprenant respectivement un tel procédé et un tel système d'émission.

### Etat de la technique

Comme précisé ci-dessous, la présente invention s'applique, de façon générale, à un système coopératif qui est susceptible d'émettre un signal coopératif,

Bien que non exclusivement, la présente invention peut notamment s'appliquer à un système d'émission d'un signal d'identification ami simulé.

On sait que différents types d'aéronefs, notamment des aéronefs militaires mais également des aéronefs civils, sont équipé d'un système d'identification ami (ou ennemi) de type IFF (pour « Identification Friend or Foe » en anglais). Un tel système d'identification est un système de communication utilisé notamment par les forces armées pour identifier les aéronefs comme étant amis ou ennemis.

Ce système d'identification fonctionne de la manière suivante :
- un dispositif d'interrogation (généralement au sol ou sur un navire) émet un signal radio représentant une interrogation IFF ;
- un transpondeur IFF monté à bord de l'aéronef considéré, reçoit cette interrogation IFF ;
- si le transpondeur reconnaît le signal d'interrogation comme valide, il envoie une réponse sous forme d'un signal IFF codé. Cette réponse contient, généralement, des informations telles que l'identité de l'aéronef, son altitude, et d'autres paramètres spécifiques ;
- le dispositif d'interrogation (ou station interrogatrice) reçoit et analyse la réponse. Si la réponse correspond aux informations attendues pour un aéronef allié, celui-ci est identifié comme ami. En l'absence de réponse ou en cas de réponse incorrecte, l'objet volant peut être considéré comme hostile ou non identifié.

Ce système d'identification aide en particulier à distinguer les amis des ennemis et ainsi à éviter les tirs amis et, plus généralement, à améliorer la coordination et la sécurité lors d'opérations militaires.

Il pourrait être intéressant, par exemple en vue de réaliser des tests, de pouvoir disposer d'un système permettant de simuler le fonctionnement d'un tel système d'identification (ami ou ennemi) de type IFF.

Plus généralement, il pourrait être intéressant de pouvoir disposer d'un système permettant de simuler le fonctionnement d'un système coopératif.

### Exposé de l'invention

La présente invention a pour objet de satisfaire ce besoin. Elle concerne un système d'émission d'au moins un signal coopératif simulé, en particulier un signal d'identification ami simulé.

Selon l'invention, ledit système d'émission comporte un drone et un dispositif de génération de signal monté sur le drone et configuré au moins pour générer un signal coopératif simulé qui représente un signal simulé censé être émis par une cible aérienne.

Ainsi, grâce à l'invention, on dispose d'un système d'émission en mesure d'émettre un signal coopératif simulé qui représente un signal permettant de faire croire à un dispositif récepteur que ce signal provient d'une cible aérienne réelle (alors que cette cible aérienne est fictive). De plus, bien que le signal coopératif simulé soit émis à partir d'un simple drone, situé à courte distance, il peut être émis (en étant adapté de façon appropriée) pour simuler une cible aérienne censé être très éloignée.

Dans le cadre de la présente invention, le système coopératif correspond à tout système monté sur un engin mobile et susceptible d'émettre un signal coopératif, à savoir un signal contenant des informations relatives audit engin mobile, permettant notamment d'en déduire sa position.

Bien que non exclusivement, le système coopératif peut correspondre à l'un des systèmes suivants :
- un système d'identification ami (ou ennemi) de type IFF (pour « Identification Friend or Foe » en anglais), tel que précisé ci-dessous ;
- un système de surveillance coopératif pour le contrôle du trafic aérien de type « ADS-B » (pour « Automatic Dependent Surveillance-Broadcast » en anglais), pour lequel un dispositif monté sur un avion envoie périodiquement, comme signal coopératif, un signal notamment d'identification de l'avion ;
- un système d'information et d'alerte de type « FLARM » destiné à de petits avions et engins volants qui émet, comme signal coopératif, un signal fournissant des informations sur l'engin volant, notamment pour éviter un risque de collision ;
- un système d'identification coopératif de type « AIS » (pour « Automatic Identification System » en anglais) pour lequel un dispositif monté sur un navire envoie périodiquement, comme signal coopératif, un signal contenant des informations (position, cap, vitesse, ...) sur le navire ; - ...

Dans un mode de réalisation préféré, le dispositif de génération de signal est configuré pour générer, comme signal coopératif, un signal dit IFF simulé qui représente un signal d'identification ami censé être émis par la cible aérienne, et ledit dispositif de génération de signal comporte au moins :
- un calculateur configuré pour générer des commandes d'identification conformément à un scénario préétabli ; et
- une unité d'identification configurée pour recevoir une interrogation dite IFF et pour déterminer ledit signal IFF simulé, en fonction de ladite interrogation IFF reçue et desdites commandes d'identification, ledit signal IFF simulé étant émis en réponse à ladite interrogation IFF reçue.

Avantageusement :
- le calculateur peut être indépendant physiquement de l'unité d'identification ; ou
- le calculateur et l'unité d'identification peuvent faire partie d'une seule et même carte électronique.

Ainsi, dans ce mode de réalisation préféré, on dispose d'un système d'émission en mesure d'émettre un signal IFF simulé qui représente un signal d'identification ami censé être émis par une cible aérienne (fictive). De plus, bien que le signal IFF simulé soit émis à partir d'un simple drone, situé à courte distance du dispositif d'interrogation (du système d'identification de type IFF), il peut être émis (en étant adapté de façon appropriée) pour simuler une cible aérienne censé se trouver loin dudit dispositif d'interrogation.

Dans le cadre de la présente invention :
- un « signal IFF » (ou signal d'identification ami) est un signal radioélectrique généré et émis en réponse à une interrogation IFF générée et émise par un dispositif d'interrogation (du système d'identification de type IFF) ; et
- un signal IFF « simulé » est un signal IFF qui permet de faire croire au dispositif d'interrogation, que ce signal IFF provient d'une cible aérienne réelle, en réponse à une interrogation IFF émise par ledit dispositif d'interrogation.

Plus particulièrement, bien que non exclusivement, une cible aérienne, pour laquelle l'émission d'un signal coopératif (notamment un signal IFF) est simulée, peut notamment correspondre à l'un des engins volants suivants :
- un avion, militaire ou civil, par exemple un avion de chasse, un bombardier, un avion de surveillance, un avion de ligne, un avion de transport, un avion de tourisme ;
- un hélicoptère.

De plus, dans certaines applications, par exemple pour un système de type « FLARM », la cible aérienne peut correspondre à l'un des engins volants suivants :
- un planeur ;
- un ULM ;
- un drone.

Dans un mode de réalisation particulier, la cible aérienne peut également correspondre à un engin mobile qui se déplace à une faible vitesse et à une hauteur (par rapport au sol) proche de 0 mètre. Un tel engin mobile peut notamment correspondre à un navire.

Comme précisé ci-dessous, ce système d'émission est particulièrement approprié pour faire partie d'un système de simulation de cibles aériennes et ainsi d'un système de test destiné à tester un système (notamment mais non exclusivement, de surveillance) multi-senseur hétérogène.

Concernant le mode de réalisation préféré précité :
- dans un premier exemple de réalisation, l'unité d'identification est un transpondeur d'identification de type IFF ; et
- dans un second exemple de réalisation, l'unité d'identification est une carte radiofréquence numérique implémentant un protocole d'identification.

Avantageusement, le dispositif de génération de signal comporte au moins l'un des éléments suivants :
- un dispositif d'émission/réception configuré pour émettre un signal IFF simulé et/ou pour recevoir une interrogation **IFF** ;
- un simulateur de position configuré pour recevoir des informations de position et de temps du calculateur et pour générer des valeurs de position (analogiques ou numériques).

De plus, de façon avantageuse, le dispositif d'émission/réception comporte au moins l'une des unités suivantes :
- une unité configurée pour réaliser une atténuation d'une interrogation IFF reçue ;
- une unité configurée pour réaliser une atténuation et/ou une amplification d'un signal IFF simulé et/ou pour générer un retard dans l'émission d'un signal IFF simulé.

Dans un mode de réalisation particulier, le dispositif de génération de signal comporte au moins l'un des éléments suivants :
- un dispositif d'émission/réception radar configuré pour recevoir un signal radar et/ou pour émettre une réponse radar simulée ;
- une carte radiofréquence numérique auxiliaire configurée pour déterminer une réponse radar simulée en fonction d'un signal radar reçu et de données reçues du calculateur, la réponse radar simulée étant transmise au dispositif d'émission/réception radar pour qu'il l'émette en réponse audit signal radar reçu.

Par ailleurs, avantageusement, le système d'émission comporte un dispositif de gestion de mission configuré pour pouvoir communiquer avec ledit drone, et le dispositif de gestion de mission comprend au moins l'une des unités suivantes :
- au moins une unité de préparation de mission ;
- au moins une unité de réalisation de mission ;
- au moins une unité de contrôle de mission.

De plus, de façon avantageuse, le système d'émission comporte au moins l'un des dispositifs de modification de trajectoire suivants :
- un dispositif de modification de trajectoire qui fait partie d'un dispositif de gestion de mission et qui est configuré pour émettre des ordres de correction de trajectoire au drone, qui sont générés automatiquement et/ou par un opérateur ;
- un dispositif de modification de trajectoire qui est monté sur le drone et qui est configuré pour modifier la trajectoire dudit drone.

La présente invention concerne également un système de simulation d'au moins une cible aérienne.

Selon l'invention, ledit système de simulation comporte au moins un système d'émission tel que décrit ci-dessus, comportant au moins un drone équipé d'un dispositif de génération de signal, ledit système d'émission étant configuré pour émettre un signal coopératif simulé, par exemple un signal dit IFF simulé, qui représente un signal censé être émis par la cible aérienne à simuler.

Dans un mode de réalisation particulier, ledit système de simulation comporte, de plus :
- au moins un drone supplémentaire équipé d'un générateur de signal apte à émettre un signal représentatif de la cible aérienne à simuler, ledit drone du système d'émission et le ou les drones supplémentaires formant un ensemble de drones ; et
- un dispositif de synchronisation configuré pour synchroniser tous les drones dudit ensemble de drones afin qu'ils simulent la même cible aérienne.

Avantageusement, le dispositif de synchronisation est configuré pour synchroniser tous les drones de l'ensemble de drones, à la fois :
- en temps (temporellement) ;
- dans l'espace (spatialement, à savoir en position et en attitude) ; et
- pour qu'ils soient cohérents par rapport à la cible aérienne qu'ils simulent et pour éviter des risques de collision (entre les drones et avec des éléments extérieurs au système).

Ainsi, le système de simulation est en mesure de former et d'émettre des signaux de types différents (dont au moins un signal coopératif simulé, par exemple un signal IFF simulé). De plus, les drones sont synchronisés, comme précisé ci-dessous, de sorte que les signaux de types différents permettent de simuler une seule et même cible aérienne.

Si ce système de simulation de cibles aériennes est utilisé pour tester un système, notamment un système surveillance et/ou les différentes chaînes d'un système d'arme, il est ainsi en mesure de tester, à la fois, des senseurs (ou moyens de détection) de types différents de ce système.

Pour ce faire, de façon avantageuse, le système de simulation comporte au moins l'un des types suivants de générateur de signal :
- un générateur de signal radiofréquence ;
- un générateur de signal infrarouge ;
- un générateur de signal visible ;
- un dispositif de génération de signal coopératif, par exemple un signal d'identification ami simulé.

Dans un mode de réalisation préféré, ledit système de simulation comprend une pluralité d'ensembles de drones, chacun desdits ensembles de drones étant configuré pour simuler une cible aérienne (différente de la cible aérienne simulée par le ou les autres ensembles de drones). Ce mode de réalisation préféré permet donc de simuler simultanément une pluralité de cibles aériennes différentes, une telle situation correspondant par exemple à un scénario d'attaque pour lequel de nombreuses cibles (ou menaces) aériennes ennemies sont envoyées en même temps pour attaquer une zone à surveiller et à protéger. Dans un mode de réalisation particulier, ledit système de simulation de cibles aériennes comprend au moins deux ensembles de drones configurés pour simuler une même cible aérienne.

La présente invention concerne également un système de test pour tester un système (notamment mais non exclusivement, de surveillance) multi-senseur hétérogène (c'est-à-dire comportant une pluralité de senseurs (ou capteurs ou détecteurs) employant des technologies différentes), en particulier d'un système d'arme multi-senseur hétérogène, ce système de test comprenant ledit système de surveillance et au moins un système de simulation d'au moins une cible aérienne tel que celui décrit ci-dessus.

Avantageusement, le système de surveillance comprend comme senseur, au moins l'un des éléments suivants :
- un radar ;
- un senseur optique (infrarouge, TV ou de type multispectrale), et par exemple un goniomètre ;
- un senseur coopératif (par exemple un dispositif d'interrogation faisant partie d'un système d'identification ami ou ennemi de type IFF).

Ledit système de simulation de cibles aériennes et/ou ledit système de test peuvent être utilisés dans de nombreuses applications différentes, et en particulier :
- pour la formation, notamment d'opérateurs du système de surveillance et/ou du système d'arme ;
- pour l'entraînement, notamment d'opérateurs du système de surveillance et/ou du système d'arme ;
- pour la calibration du système de surveillance et/ou du système d'arme ;
- pour des essais du système de surveillance et/ou du système d'arme ;
- pour la validation du système de surveillance et/ou du système d'arme ; et
- pour une démonstration.

La présente invention permet, de manière générale, de tester la chaîne complète d'un système d'arme, depuis la détection jusqu'à l'engagement (hors missile en vol), et ainsi au moins l'une des caractéristiques suivantes :
- la capacité de surveillance, de détection et de suivi de senseurs ;
- le bon comportement des algorithmes du système d'arme qui effectue la fusion de données, le traitement des données pour l'évaluation de la menace, le plan d'engagement, .... ; et
- la chaîne d'engagement avec le bon fonctionnement des algorithmes et des senseurs pendant cette phase.

La présente invention concerne également un procédé d'émission d'au moins un signal d'identification ami simulé.

Selon l'invention, au moins un signal coopératif simulé qui représente un signal censé être émis par une cible aérienne, est émis par un dispositif de génération de signal monté sur un drone.

De préférence, ledit signal coopératif simulé correspond à un signal dit IFF simulé qui représente un signal d'identification ami censé être émis par la cible aérienne, et ledit procédé comporte au moins :
- une première étape mise en œuvre par un calculateur du dispositif de génération de signal, pour générer des commandes d'identification conformément à un scénario préétabli ;
- une deuxième étape mise en œuvre par une unité d'identification du dispositif de génération de signal, pour recevoir une interrogation dite IFF et pour déterminer ledit signal IFF simulé en fonction de ladite interrogation IFF reçue et desdites commandes d'identification ; et
- une troisième étape pour émettre ledit signal IFF simulé ainsi déterminé, en réponse à ladite interrogation IFF reçue.

La présente invention concerne, en outre, une méthode de simulation d'au moins une cible aérienne.

Selon l'invention, ladite méthode de simulation comporte au moins une émission d'un signal coopératif simulé, mise en œuvre à l'aide d'un procédé d'émission tel que décrit ci-dessus.

Avantageusement, ladite méthode de simulation comporte également au moins une émission d'un signal représentatif de la cible aérienne, mise en œuvre par un générateur de signal monté sur un drone supplémentaire, le drone utilisé pour mettre en œuvre ledit procédé d'émission et le ou les drones supplémentaires formant un ensemble de drones, et tous les drones dudit ensemble de drones sont synchronisés afin qu'ils simulent la même cible aérienne.

Avantageusement, les drones de l'ensemble de drones sont synchronisés, à la fois :
- en temps (temporellement) ;
- dans l'espace (spatialement, à savoir en position et en attitude) ; et
- pour qu'ils soient cohérents par rapport à la cible aérienne qu'ils simulent et pour éviter des risques de collision (entre les drones et des éléments extérieurs au système).

### Brève description des figures

Les figures annexées feront bien comprendre comment l'invention peut être réalisée. Sur ces figures, des références identiques désignent des éléments semblables.
La figure 1 représente schématiquement un mode de réalisation particulier d'un système d'émission d'un signal d'identification ami simulé.
La figure 2 est le schéma synoptique d'un drone pourvu d'un dispositif de génération de signal selon un premier mode de réalisation.
La figure 3 est le schéma synoptique d'un drone pourvu d'un dispositif de génération de signal selon un deuxième mode de réalisation.
La figure 4 est le schéma synoptique d'un drone pourvu d'un dispositif de génération de signal selon un troisième mode de réalisation.
La figure 5 est le schéma synoptique d'un drone pourvu d'un dispositif de génération de signal selon un quatrième mode de réalisation.
La figure 6 est le schéma synoptique d'un dispositif de gestion de mission faisant partie du système d'émission.
La figure 7 représente schématiquement un premier mode de réalisation particulier d'un système de simulation de cibles aériennes, comprenant un système d'émission.
La figure 8 représente schématiquement un deuxième mode de réalisation particulier d'un système de simulation de cibles aériennes, comprenant un système d'émission.
La figure 9 représente schématiquement un troisième mode de réalisation particulier d'un système de simulation de cibles aériennes, comprenant un système d'émission.
La figure 10 est le schéma synoptique d'un procédé de simulation de cibles aériennes.

### Description détaillée

On décrit, ci-après, des exemples d'un système 1 d'émission d'au moins un signal coopératif simulé, qui fait partie d'un système coopératif.

Ce système 1 d'émission comporte un drone 3 et un dispositif 4 de génération de signal monté sur le drone 3 et configuré au moins pour générer un signal coopératif simulé, qui représente un signal simulé censé être émis par une cible aérienne 2.

Le système coopératif, pour lequel le système 1 d'émission émet un signal coopératif simulé, peut notamment correspondre à l'un des systèmes suivants :
- un système de surveillance coopératif pour le contrôle du trafic aérien de type « ADS-B » (pour « Automatic Dependent Surveillance-Broadcast » en anglais), pour lequel un dispositif monté sur un avion envoie périodiquement, comme signal coopératif, un signal notamment d'identification de l'avion. Dans ce cas, le dispositif de génération de signal monté sur le drone, génère un signal coopératif de ce type qui est simulé ;
- un système d'information et d'alerte de type « FLARM » destiné à de petits avions et engins volants qui émet, comme signal coopératif, un signal fournissant des informations sur l'engin volant, notamment pour éviter un risque de collision. De même, dans ce cas, le dispositif de génération de signal monté sur le drone, génère un signal coopératif de ce type qui est simulé ;
- un système d'identification coopératif de type « AIS » (pour « Automatic Identification System » en anglais) pour lequel un dispositif monté sur un navire envoie périodiquement, comme signal coopératif, un signal contenant des informations (position, cap, vitesse, ...) sur le navire. Dans ce cas également, le dispositif de génération de signal monté sur le drone, génère un signal coopératif de ce type qui est simulé.

Dans un mode de réalisation préféré, le système coopératif est un système d'identification ami (ou ennemi) de type IFF (pour « Identification Friend or Foe » en anglais). La description suivante concerne ce mode de réalisation préféré.

Plus particulièrement, bien que non exclusivement, une cible aérienne 2, pour laquelle l'émission d'un signal coopératif (et notamment d'un signal IFF) est simulé, peut correspondre à l'un des engins volants suivants :
- un avion, militaire ou civil, par exemple un avion de chasse, un bombardier, un avion de surveillance, un avion de ligne, un avion de transport, un avion de tourisme ;
- un hélicoptère.

De plus, dans certaines applications, telles que pour un système de type « FLARM », la cible aérienne peut correspondre à l'un des engins volants suivants : un planeur ;
- un ULM ;
- un drone.

Dans un mode de réalisation particulier, la cible aérienne peut également correspondre à un engin mobile qui se déplace à une faible vitesse et à une hauteur (par rapport au sol) proche de 0 mètre. Un tel engin mobile peut notamment correspondre à un navire.

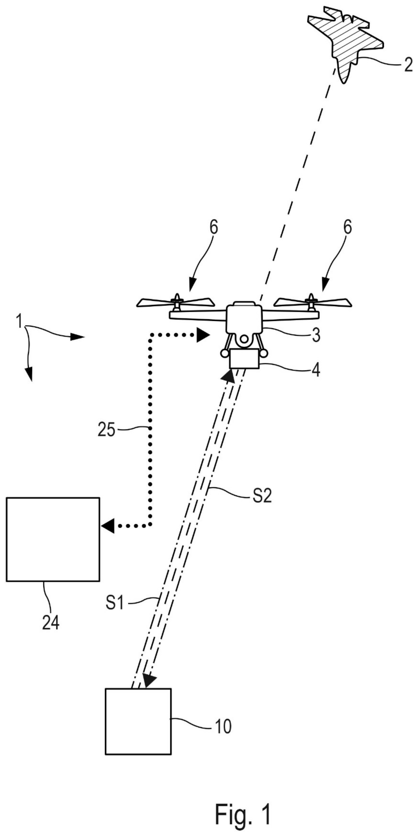

Dans le mode de réalisation préféré (relatif à un système d'identification ami (ou ennemi)), le système 1 d'émission permettant d'illustrer l'invention et représenté schématiquement dans un exemple de réalisation particulier sur la figure 1 est destiné à émettre, comme signal coopératif simulé, un signal dit IFF d'identification ami simulé (« signal IFF simulé S2 » ci-après).

Dans le cadre de la présente invention :
- un « signal IFF » (ou signal d'identification ami) est un signal radioélectrique émis en réponse à une interrogation IFF. L'interrogation IFF est un signal radioélectrique émis par un dispositif d'interrogation 10 (d'un système d'identification de type IFF) et reçu par le système 1, tel que le signal S1 de la figure 1 ; et
- un signal IFF « simulé » est un signal IFF qui permet de faire croire au dispositif d'interrogation 10 (ou interrogateur), que ce signal IFF simulé (tel que le signal IFF simulé S2 de la figure 1) provient d'une cible aérienne 2 réelle, en réponse à une interrogation IFF (telle que l'interrogation IFF S1 de la figure 1).

Le système 1 (qui est destiné à mettre en œuvre un procédé d'émission d'un signal d'identification ami simulé) comporte donc un drone 3 et un dispositif de génération de signal (ci-après, dispositif 4) qui est donc monté sur le drone 3, comme représenté schématiquement sur la figure 1.

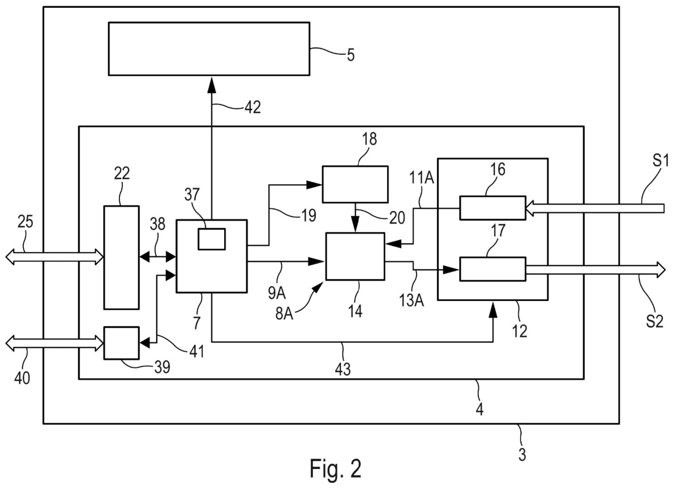

On a représenté sur les figures 2 à 5, à titre d'illustration non limitative, de façon très schématique, un drone 3, c'est-à-dire un aéronef sans pilote, faisant partie du système 1. Tous les drones du système 1 (ou du système 50 décrit ci-dessous) peuvent correspondre à un drone 3 de l'une des figures 2 à 5. Le drone 3 comprend des moyens 5 usuels (notamment des moyens de sustentation (voilures tournantes 6 (figure 1), ...) et de génération d'une force d'avancement), qui sont représentés de façon schématique sur les figures 2 à 5 et qui sont formés de manière à faire voler le drone 3. Le drone 3 est de préférence de type multicoptère ou multirotor. Le drone 3 comporte également d'autres équipements précisés ci-dessous.

Selon l'invention, le dispositif 4 (de génération de signal) qui est monté sur le drone 3 est configuré au moins pour générer un signal IFF simulé S2 qui représente un signal d'identification ami censé être émis par la cible aérienne 2, en réponse à une interrogation IFF S1 émise par le dispositif d'interrogation 10.

La cible aérienne 2 est représentée en traits hachurés sur la figure 1 pour bien mettre en évidence qu'elle est simulée et donc virtuelle, et ne correspond pas à un objet aérien (ou volant) réel. Les cibles aériennes 2 peuvent représenter tout objet volant que l'on souhaite simuler.

Pour ce faire, ledit dispositif 4 comporte, comme représenté dans différents modes de réalisation particuliers sur les figures 2 à 5 :
- un calculateur 7 configuré pour générer des commandes d'identification conformément à un scénario préétabli. Ce scénario préétabli est déterminé en préparation de mission et fourni au calculateur 7. Le calculateur 7 est également relié par l'intermédiaire d'une liaison 42 aux moyens 5 pour leur transmettre des ordres de commande, comme précisé ci-dessous ; et
- une unité d'identification 8A, 8B qui est reliée par l'intermédiaire d'une liaison 9A, 9B au calculateur 7 et qui est configurée pour recevoir une interrogation IFF S1 et pour déterminer le signal IFF simulé S2 correspondant.

L'unité d'identification 8A, 8B détermine ce signal IFF simulé S2, en fonction de l'interrogation IFF S1 (externe au drone 3, et reçue par l'intermédiaire d'une liaison 11A, 11B d'un dispositif d'émission/réception 12) et desdites commandes d'identification (reçues du calculateur 7 via la liaison 9A, 9B). Le dispositif d'émission/réception 12 (monté sur le drone 3) reçoit cette interrogation IFF S1 du dispositif d'interrogation 10 (figure 1) situé à distance du drone 3.

Le signal IFF simulé S2, ainsi déterminé, est émis en réponse à ladite interrogation IFF S1 reçue, par le dispositif d'émission/réception 12 qui le reçoit (directement ou indirectement) de l'unité d'identification 8A, 8B, via une liaison 13A, 13B, 13C.

Les commandes d'identification concernent toutes les informations (retard, atténuation, amplification, ...) transmises par le calculateur 7 à l'unité d'identification 8A, 8B pour le commander afin de lui permettre de déterminer le signal IFF simulé S2 à émettre.

Dans les différents modes de réalisation des figures 2 à 5, des paramètres IFF (représentatifs du scénario préétabli) sont définis en préparation de mission, à savoir notamment :
- les modes IFF ;
- la position de la cible aérienne simulée ;
- l'atténuation du signal IFF (en entrée et sortie du dispositif d'émission/réception 12.)

Ces paramètres IFF (représentatifs du scénario préétabli) sont utilisés par le calculateur 7 pour déterminer les commandes d'identification.

Dans un premier mode de réalisation, représenté sur les figures 2 à 4, respectivement selon trois variantes différentes, l'unité d'identification 8A est un transpondeur d'identification 14 usuel, de type IFF, c'est-à-dire un transpondeur d'identification qui est employé actuellement sur des aéronefs. On utilise, de préférence, un transpondeur d'identification 14 usuel, peu encombrant et à masse réduite.

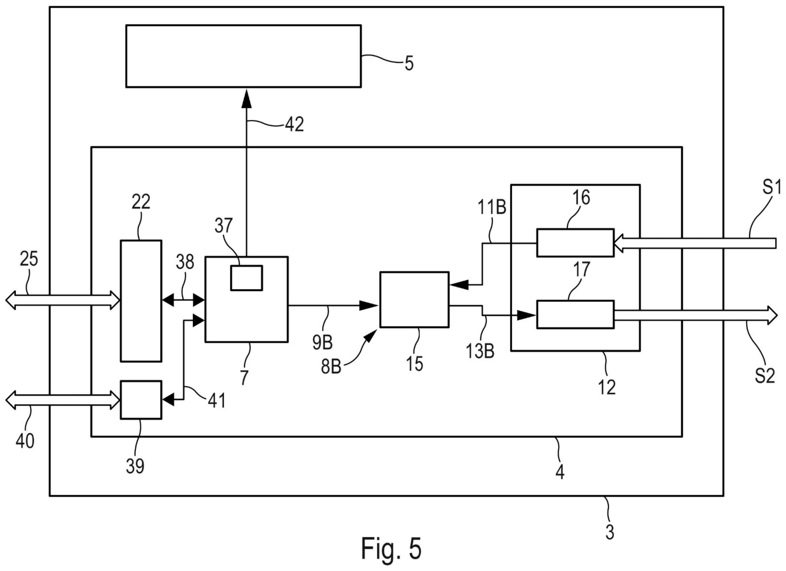

En outre, dans un second mode de réalisation, représenté sur la figure 5, l'unité d'identification 8B est une carte radiofréquence numérique 15, de type DRFM (pour « Digital Radio Frequency Memory » en anglais). Cette carte radiofréquence numérique 15 comprend un protocole d'identification identique à celui mis en œuvre par le transpondeur d'identification 14.

Comme indiqué ci-dessus et représenté sur les figures 2 à 5, le dispositif d'émission/réception 12 est donc configuré pour recevoir une interrogation IFF S1 (de l'extérieur du dispositif 4 du drone 3) et/ou pour émettre un signal IFF simulé S2 (à l'extérieur du dispositif 4 du drone 3).

Pour ce faire, le dispositif d'émission/réception 12 comporte une unité 16 configurée pour réaliser une atténuation d'une interrogation IFF S1 reçue par le dispositif 4 du drone 3.

De plus, le dispositif d'émission/réception 12 comporte également une unité 17. Cette unité 17 est configurée pour réaliser une atténuation et/ou une amplification d'un signal IFF reçue par l'intermédiaire de la liaison 13A, 13B de l'unité d'identification 8A, 8B, avant son émission comme signal IFF simulé S2.

Cette unité 17 est également apte à générer un retard dans l'émission du signal IFF simulé S2.

Le dispositif d'émission/réception 12 met donc en œuvre deux fonctions, à savoir :
- une atténuation ou une amplification du signal en réception et en émission. Les valeurs pour l'atténuation et/ou l'amplification sont obtenues :
   - soit par un réglage manuel par un opérateur en préparation de mission ;
   - soit par un réglage automatique à partir d'un ordre du calculateur 7 embarqué ;
   - soit à la fois par un réglage manuel et un réglage automatique ;
- un retard du signal radiofréquence émis (signal IFF simulé). Ce retard est appliqué par le calculateur 7 embarqué à chaque instant du scénario.

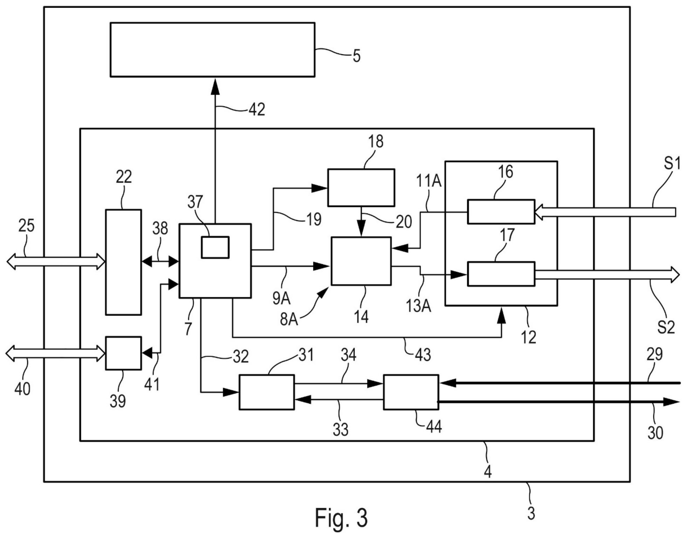

Pour ce faire, le calculateur 7 envoie des valeurs de retard et/ou d'atténuation ou d'amplification au dispositif d'émission/réception 12 par l'intermédiaire d'une liaison 43 (figures 2 et 3).

Avec le scénario défini, on connaît à chaque instant la position de la cible simulée. Comme on connaît ainsi la distance entre le dispositif d'interrogation 10 et le drone 3, ainsi que les caractéristiques du dispositif d'interrogation 10 (et de son antenne) :
- on peut calculer le retard (pour simuler la distance entre le dispositif d'interrogation 10 et la cible aérienne 2) ;
- comme la puissance en entrée de l'unité d'identification 8A, 8B est connue, on peut calculer en temps réel (ou en préparation de mission) l'atténuation du signal reçu ;
- comme la puissance en entrée du dispositif d'interrogation 10 est connue, on peut calculer en temps réel (ou en préparation de mission) l'amplification ou l'atténuation du signal à émettre.

Par ailleurs, le dispositif 1 comporte également un simulateur de position 18, comme représenté sur les figures 2 à 4.

Le simulateur de position 18 est configuré pour recevoir des informations de position et de temps du calculateur 7, par l'intermédiaire d'une liaison 19, et pour générer des valeurs de position (analogiques ou numériques) correspondantes, qui sont transmises à l'unité d'identification 8A par l'intermédiaire d'une liaison 20.

La position de la cible aérienne 2 simulée permet au calculateur 7 de calculer :
- le retard à appliquer au signal à chaque instant du scénario ;
- la position GPS à fournir par le simulateur de position 18 à chaque instant du scénario.

Le simulateur de position 18 permet de simuler la position GPS de la cible qui est prise en entrée de l'unité d'identification 8A. Elle est réglée à chaque instant du scénario par le calculateur 7 embarqué.

Dans le mode de réalisation particulier de la figure 5, le simulateur de position (non représenté), qui réalise également les fonctions précitées, est intégré dans le calculateur 7.

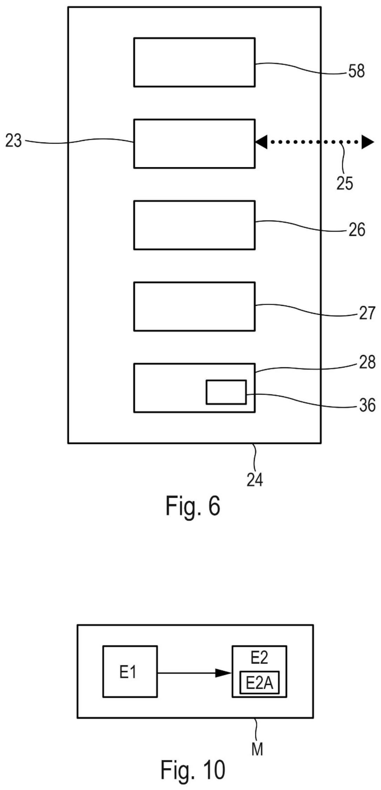

Dans les modes de réalisation particuliers, représentés sur les figures 2 à 5, le dispositif 4 comporte également un dispositif d'émission/réception 22 relié par une liaison 38 au calculateur 7 et apte à coopérer avec un dispositif d'émission/réception 23 faisant partie d'un dispositif 24 de gestion de mission, représenté sur la figure 6. Le dispositif 24 de gestion de mission est de préférence installé au sol ou sur un véhicule terrestre (ou bien sur un navire). Plus précisément, le dispositif d'émission/réception 22 et le dispositif d'émission/réception 23 sont aptes à échanger des informations sous forme de signaux radioélectriques, comme illustré par des doubles flèches 25 sur les figures.

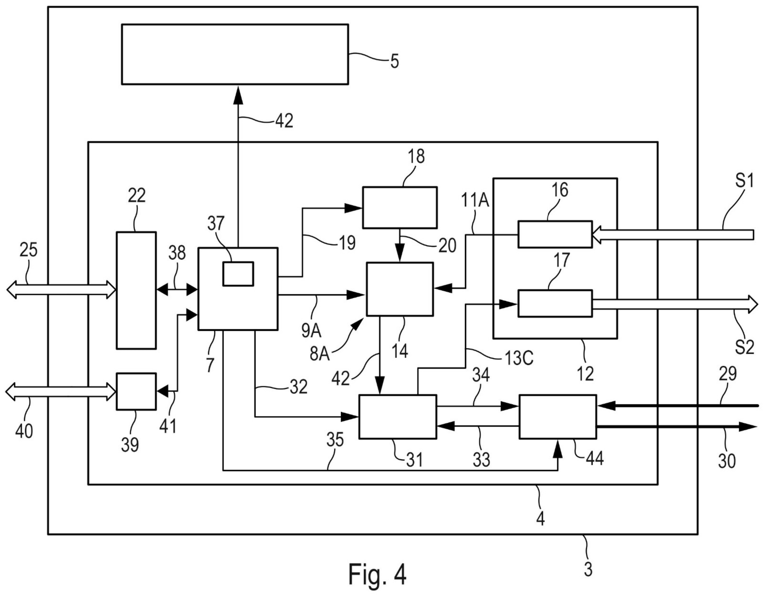

En outre, dans le mode de réalisation des figures 3 et 4, le dispositif 4 comporte également un dispositif d'émission/réception radar 44. Le dispositif d'émission/réception radar 44 est configuré pour recevoir un signal radar 29 ou pour émettre une réponse radar simulée 30.

Dans la variante de la figure 4, le calculateur 7 peut être, de plus, relié par l'intermédiaire d'une liaison 35 au dispositif d'émission/réception radar 44.

De plus, dans le mode de réalisation particulier, représenté sur les figures 3 et 4, le dispositif 4 comporte également une carte radiofréquence numérique auxiliaire 31 de type DRFM (pour « Digital Radio Frequency Memory » en anglais). Cette carte radiofréquence numérique auxiliaire 31 est reliée par l'intermédiaire d'une liaison 32 au calculateur 7 et par l'intermédiaire de liaisons 33 et 34 au dispositif d'émission/réception radar 44.

La carte radiofréquence numérique auxiliaire 31 est configurée pour déterminer une réponse radar simulée 30 en fonction d'un signal radar 29 reçu du dispositif d'émission/réception radar 44 (via la liaison 33) et de données reçues du calculateur 7 (via la liaison 32).

La réponse radar simulée 30 (ainsi déterminée) est transmise au dispositif d'émission/réception radar 44 (via la liaison 34) pour qu'il l'émette en réponse audit signal radar 29 reçu.

Par conséquent, dans les modes de réalisation des figures 3 et 4, le dispositif 4 intègre une capacité de répondeur radar, en parallèle. Le dispositif 4 et les fonctions principales correspondantes mises en œuvre sont pilotés par le calculateur 7.

Dans le mode de réalisation de la figure 3, la fonction de retard (appliquée par le dispositif d'émission/réception 12) est gérée par le calculateur 7 via la liaison 43, tandis que dans le mode de réalisation de la figure 4, la fonction de retard (appliquée par le dispositif d'émission/réception 12) est gérée par la carte radiofréquence numérique auxiliaire 31 via la liaison 13C. Pour ce faire, la carte radiofréquence numérique auxiliaire 3 utilise un retard qui est calculé par le calculateur 7 et qui est reçu via la liaison 32.

Par ailleurs, dans une variante de réalisation (non représentée) du mode de réalisation de la figure 5, le dispositif 4 peut également comporter un dispositif d'émission/réception radar (tel que le dispositif d'émission/réception radar 44 des figures 3 et 4 par exemple) qui est configuré pour recevoir un signal radar (tel que le signal radar 29 par exemple) ou pour émettre une réponse radar simulée (telle que la réponse radar simulée 30 par exemple). De plus, dans ce cas, la carte radiofréquence numérique 15 est configurée pour également déterminer la réponse radar simulée en fonction du signal radar reçu et de données reçues du calculateur. La réponse radar simulée (ainsi déterminée) est transmise au dispositif d'émission/réception radar pour qu'il l'émette en réponse audit signal radar reçu. Par conséquent, dans cette variante de réalisation (non représentée), le dispositif 4 intègre une capacité de répondeur radar, gérée également par la carte radiofréquence numérique 15 (en plus de sa gestion du signal IFF).

Par ailleurs, le dispositif 24 de gestion de mission comporte de plus, comme représenté sur la figure 6 :
- au moins une unité 26 de préparation de mission ;
- au moins une unité 27 de réalisation de mission ;
- au moins une unité 28 de contrôle de mission.

L'unité 26 de préparation de mission du dispositif 24 de gestion de mission est utilisée par un opérateur pour préparer la mission (d'émission d'un signal d'identification ami simulé) et notamment pour définir la trajectoire du drone 3 et les caractéristiques du signal IFF simulé S2 émis par le dispositif 4.

L'unité 27 de réalisation de mission du dispositif 24 de gestion de mission est destinée à la mise en œuvre de la mission (d'émission d'un signal d'identification ami simulé).

Quant à l'unité 28 de contrôle du dispositif 24 de gestion de mission, elle a pour but de contrôler la mission, lors de sa réalisation. Pour ce faire, l'unité 28 de contrôle de mission comprend (ou est associé à) au moins un dispositif de modification de trajectoire 36 qui est configuré pour modifier la trajectoire du drone 3 si besoin.

Le système 1 comporte au moins l'un des dispositifs de modification de trajectoire suivants :
- le dispositif de modification de trajectoire 36 qui fait partie de l'unité 28 de contrôle du dispositif 24 de gestion de mission (figure 6) et qui est configuré pour émettre des ordres de correction de trajectoire au drone 3, qui sont générés automatiquement et/ou par un opérateur ; et
- un dispositif de modification de trajectoire 37 qui est monté sur le drone 3 et intégré dans le calculateur 7 (figures 2 à 5) et qui est configuré pour modifier la trajectoire dudit drone 3.

Dans un mode de réalisation particulier, le calculateur 7 est notamment apte à déterminer automatiquement des ordres de guidage, qui sont transmis aux moyens 5 via la liaison 42 et qui sont utilisés par les moyens 5 pour guider le drone 3. Le drone 3 peut ainsi être guidé automatiquement sans intervention (ou avec une intervention restreinte) d'un opérateur, par exemple pour éviter une collision avec un autre drone et tout simplement pour remplir sa mission, puisque c'est le calculateur 7 qui envoie périodiquement (via la liaison 42) des ordres aux moyens 5 pour que la trajectoire à simuler soit correcte. Le drone 3 peut ainsi voler de façon autonome dans ce mode de réalisation particulier.

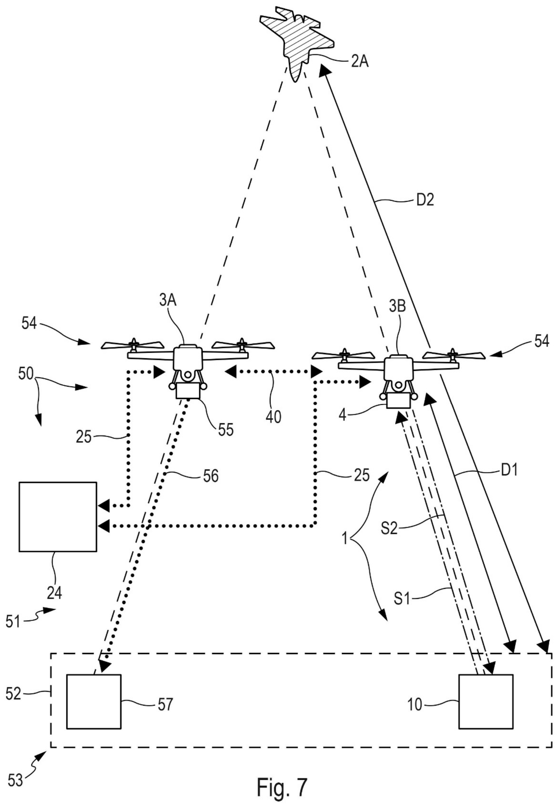

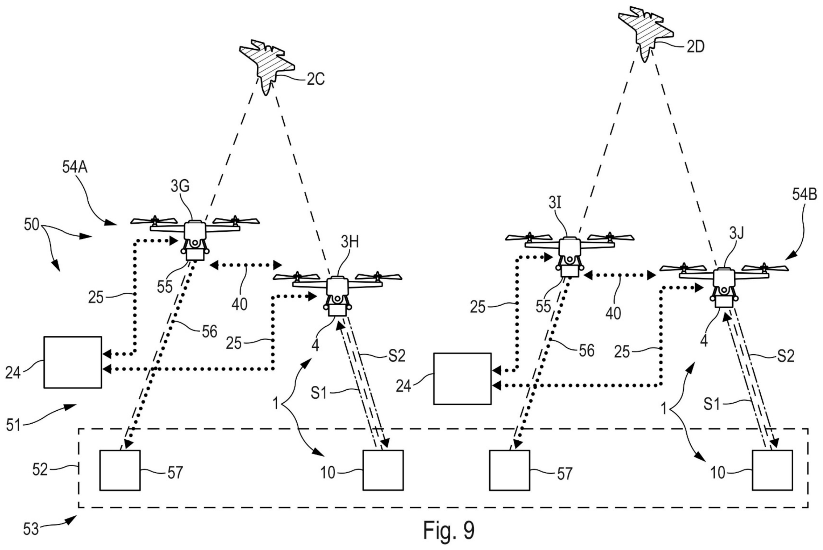

Par ailleurs, dans un mode de réalisation particulier, le drone 3 comporte également un dispositif d'émission/réception 39 qui est relié par l'intermédiaire d'une liaison 41 au calculateur 7 (figures 2 à 5) et qui coopère avec un dispositif d'émission/réception 39 (similaire) d'un autre drone 3 avec lequel il peut communiquer. Les dispositifs d'émission/réception 39 de deux drones 3 sont ainsi aptes à échanger des informations, via l'émission et la réception d'ondes électromagnétiques, comme illustré par des doubles flèches 40 sur les figures 7 et 9 notamment.

De préférence, les informations échangées ont pour but d'empêcher une collision entre les deux drones. Pour ce faire, les drones s'informent, respectivement, de leur positionnement effectif. Ces informations de positionnement peuvent également être utilisées pour corriger en temps réel le positionnement des drones 3 de manière à rester représentatifs d'une même cible aérienne.

Le procédé d'émission d'un signal dit IFF simulé S2, mis en œuvre par le dispositif 4 (de génération de signal), comporte au moins les étapes suivantes :
- une étape mise en œuvre par le calculateur 7, pour générer des commandes d'identification conformément à un scénario préétabli ;
- une étape pour recevoir, à l'aide du dispositif d'émission/réception 12, une interrogation dite IFF S1 ;
- une étape mise en œuvre par l'unité d'identification 8A, 8B, pour déterminer le signal IFF simulé S2 en fonction de cette interrogation IFF S1 reçue et desdites commandes d'identification ; et
- une étape pour émettre, via le dispositif d'émission/réception 12, le signal IFF simulé S2 ainsi déterminé, en réponse à ladite interrogation IFF S1 reçue.

Le système 1 permet donc de simuler une piste IFF cohérente à partir d'un drone en distance proche.

Bien que non exclusivement, ledit système 1 (d'émission de signal IFF simulé), tel que décrit ci-dessus, peut faire partie d'un système 50 de simulation de cibles aériennes, représenté dans des modes de réalisation différents sur les figures 7 à 9.

Ce système 50 peut, quant à lui, faire partie d'un système de test 51 destiné à tester un système de surveillance 52 d'au moins une zone (ci-après « système de surveillance 52 »). Le système de surveillance 52 est, de préférence, un système de surveillance de type multi-senseur hétérogène, c'est-à-dire qui comprend une pluralité de senseurs (ou capteurs ou détecteurs) hétérogènes (c'est-à-dire de types différents).

Dans l'exemple de la figure 7, le système de surveillance 52 comprend, notamment, un dispositif d'interrogation 10 et un senseur (ou imageur) infrarouge 57. Le système de surveillance 52 peut également comprendre d'autres senseurs tels qu'un radar par exemple, comme précisé ci-dessous.

Le système de surveillance 52 est destiné à surveiller une zone géographique particulière autour de son installation. Cette zone géographique est de préférence une zone géographique terrestre, mais peut également être, au moins en partie, une zone maritime. Il peut notamment s'agir d'un site, d'un bâtiment, ou d'un ou de plusieurs navires ou d'un ou de plusieurs véhicules par exemple en convoi.

Dans un mode de réalisation particulier, le système de surveillance 52 fait partie d'un système d'arme 53, qui est destiné par exemple à protéger cette zone géographique, et qui comprend, en plus du système de surveillance 52, des armes (non représentées) permettant en particulier de neutraliser des engins volants hostiles (notamment des engins volants hostiles, détectés par le système de surveillance 52). Dans ce cas, le système de test 51 est destiné à tester le système de surveillance 52 et/ou les différentes chaînes du système d'arme 53.

Le système de surveillance 52 peut donc être déployé sur terre (à poste fixe, ou de façon mobile sur un véhicule terrestre), ou en mer (sur un navire, militaire ou civil). Il peut également être utilisé pour des systèmes non militaires, par exemple un système anti-drone d'un site sensible civil comme une centrale électrique, un réseau de senseurs d'un aéroport, ...

Le système 50 est donc destiné à simuler des cibles aériennes. Dans le cadre de la présente invention, on entend par « simuler une cible aérienne » le fait de générer et d'émettre des signaux, qui permettent de faire croire à un système de surveillance, tel que le système de surveillance 52, que ces signaux proviennent d'une cible aérienne réelle. Les cibles aériennes sont identifiées par une référence 2, à laquelle on a ajouté des lettres A, B, C, D sur les figures 7 à 9 pour les différencier entre elles.

Le système 50 comprend, comme représenté sur la figure 7, au moins un ensemble 54 de drones. L'ensemble 54 comprend une pluralité de drones 3. Pour différencier les drones 3 entre eux, on a ajouté des lettres A, B, ..., à la référence 8 sur les figures 7 à 9.

Dans un mode de réalisation particulier, chaque ensemble 54 de drones comprend un couple de drones (à savoir deux drones tels que les drones 3A et 3B de l'ensemble 54 de la figure 7). Bien entendu, il est également envisageable que l'ensemble 54 de drones comprenne plus de deux drones 3, par exemple trois ou quatre drones, comme précisé ci-dessous en référence à l'exemple de la figure 9.

Chacun des drones 3 de l'ensemble 54 du système 50 est équipé d'un générateur de signal apte à émettre un signal représentatif d'une cible aérienne 2 à simuler.

Plus précisément, pour chaque ensemble 54 de drones, l'un des drones de l'ensemble 54 de drones est équipé d'un générateur de signal d'un premier type correspondant à un dispositif de génération d'un signal IFF simulé, comme par exemple le drone 3B de la figure 1 qui est équipé du dispositif 4 (de génération de signal) qui émet un signal IFF simulé S2, et un autre drone de l'ensemble 54 de drones est équipé d'un générateur de signal d'un second type (différent du premier type), comme par exemple le drone 3A de la figure 1 qui est équipé d'un générateur de signal infrarouge 55.

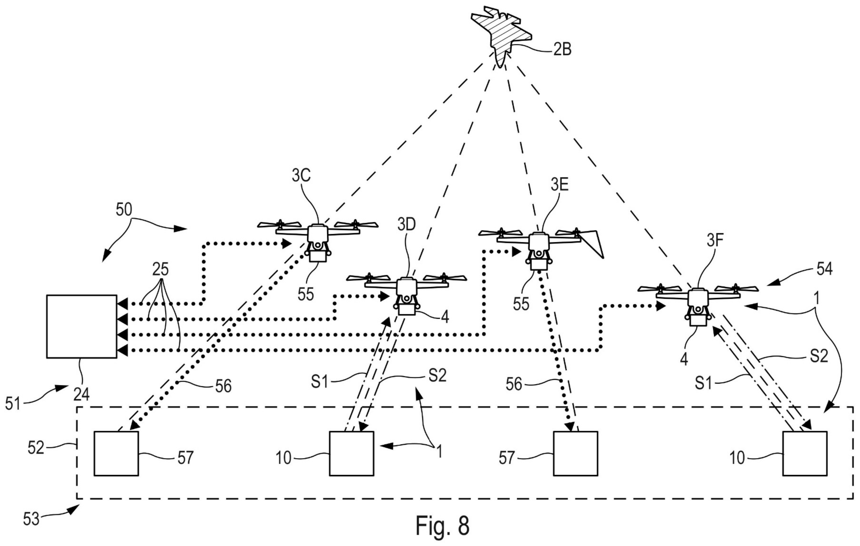

Plus précisément, le générateur de signal infrarouge 55 est un illuminateur infrarouge, c'est-à-dire un dispositif usuel apte à émettre un signal infrarouge, tel qu'illustré par une flèche 56 en pointillés sur la figure 8. Ce signal infrarouge lorsqu'il est émis par le générateur infrarouge 55 du drone 3A est détecté par un senseur infrarouge 57 du système de surveillance 52. Le senseur infrarouge 57 du système de surveillance 52 croît ainsi, par la détection de ce signal infrarouge 25 émis par le drone 3A (figure 1), détecter une zone chaude d'une cible aérienne réelle (par exemple ses réacteurs ou une autre partie présentant une signature infrarouge caractéristique et connue) et donc détecter cette cible aérienne réelle.

Dans les exemples illustratifs et non limitatifs représentés sur les figures 7 à 9, sont représentés des dispositifs 4 de génération de signal et des générateurs de signal infrarouge 55, qui sont associés, respectivement, à des dispositifs d'interrogation 10 et à des senseurs (ou imageurs) infrarouges 57.

Toutefois, dans le cadre de la présente invention, le système 50 :
- peut comprendre, en plus d'un ou de plusieurs dispositifs 4 de génération de signal et/ou en plus ou à la place d'un ou de plusieurs générateurs de signal infrarouge 55, un ou plusieurs générateurs de signal visible et/ou un ou plusieurs générateurs de signal radiofréquence ; et
- peut être associé à de nombreux types de senseurs, et notamment à :
   - des radars ;
   - des senseurs optiques, de type infrarouge, TV ou multispectrale, et également à des goniomètres ;
   - des senseurs coopératifs (tels qu'un dispositif d'interrogation 10 faisant partie d'un système d'identification ami ou ennemi de type IFF ou des senseurs faisant partie d'un des autres systèmes coopératifs précités).

En particulier, un générateur de signal radiofréquence (non représenté) qui peut par exemple être réalisé à partir d'une technologie DRFM (pour « Digital Radio Frequency Memory » en anglais), peut notamment être utilisé pour simuler une cible aérienne pour un radar. Pour ce faire, le générateur de signal radiofréquence comprend un détecteur pour détecter un signal radiofréquence initial émis par le radar, une unité de traitement pour déterminer et générer un signal radiofréquence de réponse, en fonction du signal radiofréquence initial détecté par le détecteur et de caractéristiques de la cible aérienne que l'on souhaite simuler, et un émetteur pour émettre ce signal radiofréquence de réponse vers le radar. Lorsqu'il détecte ce signal radiofréquence de réponse, le radar croît détecter l'écho d'une cible aérienne et ainsi détecter une cible aérienne qui présente les caractéristiques (de distance et de vitesse notamment) prises en compte pour déterminer ledit signal radiofréquence de réponse.

Par ailleurs, le système 50 comprend également un dispositif de synchronisation 58 (figure 6) configuré pour synchroniser les drones 3 de l'ensemble 54 de drones afin qu'ils simulent une seule et même cible aérienne 2, comme dans l'exemple de la figure 7.

Plus précisément, le dispositif de synchronisation 58 est configuré pour synchroniser les drones de l'ensemble 54 de drones, à la fois :
- en temps (temporellement) ;
- dans l'espace (spatialement) ; et
- pour être cohérents par rapport à la cible aérienne 2 qu'ils simulent, et pour éviter des risques de collision entre les drones 3 et avec des éléments extérieurs au système 50.

Le dispositif de synchronisation 58 synchronise également les charges utiles afin qu'elles soient synchronisées en temps et en termes de paramètres (qui sont liés à chaque type de charge utile).

Ainsi, le système 50 est en mesure de générer, par l'intermédiaire d'au moins deux drones 3, tels que les drones 3A et 3B de la figure 1, des signaux de types différents. De plus, les drones 3 sont synchronisés de sorte que les signaux de types différents permettent de simuler une seule et même cible aérienne, telle que la cible aérienne 2A de la figure 1.

Si le système 50 fait partie d'un système de test 51, il est ainsi en mesure de tester des moyens de détection (ou senseurs) de types différents.

Par ailleurs, dans un mode de réalisation préféré, au moins certains des drones 3 du système 50, et de préférence l'ensemble des drones 3 du système 50, sont des drones multicoptère ou multirotor, c'est-à-dire des drones avec plus de deux voilures tournantes 6 (figure 1), c'est-à-dire plus de deux rotors générateurs de portance, et par exemple quatre, six ou huit voilures tournantes 6. On utilise ainsi des drones 3 très maniables, qui sont en mesure de suivre toutes les trajectoires souhaitées, et notamment des trajectoires complexes.

Le système 50, tel que décrit ci-dessus, permet de mettre en œuvre une méthode M de simulation de cibles aériennes. Cette méthode M comprend, comme représenté sur la figure 10, notamment une étape E1 de préparation de la mission et une étape E2 de réalisation de la mission, au cours de laquelle est mise en œuvre une sous-étape E2A de contrôle de la mission.

Lors de l'étape E1 de préparation de la mission, un opérateur utilise l'unité 26 de préparation de mission, pour définir des paramètres de mission, et en particulier pour définir :
- les caractéristiques permettant à l'unité 26 de déterminer la trajectoire à suivre par chaque drone 3 du système 50, qui sera utilisée lors de la réalisation de la mission ; et
- les caractéristiques du signal qui sera émis par le générateur de signal de chaque drone 3 du système 50.

Les paramètres de mission, et en particulier la trajectoire et les caractéristiques du signal à émettre, déterminés lors de la préparation de la mission, sont enregistrés dans une base de données du dispositif 24, et par exemple de l'unité 27 et/ou dans une base de données du calculateur 7 du drone 3.

Lors de l'étape E2 de réalisation de la mission, ces paramètres de mission sont transmis aux moyens 5 et au générateur de signal (par exemple un dispositif 4 de génération de signal ou un générateur de signal infrarouge 55) du drone 3 pour mettre en œuvre la mission. Ces paramètres de mission sont transmis aux moyens 5 et au générateur de signal soit tels quels (s'ils sont utilisables tels quels) en transitant via le calculateur 7, soit si nécessaire après traitement par le calculateur 7 pour les adapter à des ordres utilisables par les moyens 5 et le générateur de signal.

Lors de l'étape E2 de réalisation de la mission, on fait voler chaque drone 3 du ou des ensembles 54 de drones du système 50 à proximité (généralement à une distance inférieure à 2 kilomètres) du système de surveillance 52. Plus précisément, chaque drone 3 vole (de façon autonome ou sous la commande d'un opérateur au sol) suivant la trajectoire prédéterminée correspondante (définie par les paramètres de la mission). De plus, lors de ce vol, le générateur de signal de chaque drone 3 émet les signaux correspondants (définis par les paramètres de la mission).

La trajectoire suivie et le signal émis par chaque drone 3 sont tels qu'un senseur (par exemple un dispositif d'interrogation 10, un radar ou un senseur infrarouge 57) du système de surveillance 52 croît détecter un engin volant (c'est-à-dire une cible aérienne 2) volant à une distance plus grande du système de surveillance 52, comme précisé ci-dessous, et qu'il considère cet engin volant comme étant réel. Le drone 3 simule ainsi une cible aérienne 2.

De plus, tous les drones de chaque ensemble 54 de drones sont synchronisés pour simuler une seule et même cible aérienne. A titre d'exemple, dans le mode de réalisation de la figure 7, les drones 3A et 3B de l'ensemble 54 sont synchronisés pour simuler la cible aérienne 2A.

Cette synchronisation consiste à adapter les vols des drones 3A et 3B l'un à l'autre, ainsi que les émissions de signaux par les générateurs de signal de ces drones 3A et 3B, à savoir le dispositif 4 et le générateur de signal infrarouge 55. Les drones de l'ensemble 54 sont commandés pour voler et pour émettre des signaux, afin de satisfaire cette synchronisation. Cette synchronisation de tous les drones de l'ensemble 54 est réalisée, à la fois
- spatialement. Les drones de l'ensemble 54 sont commandés pour se déplacer dans l'espace afin de suivre les trajectoires prescrites de manière à se trouver à une position prescrite (sur la trajectoire prescrite correspondante) ;
- temporellement. Les drones de l'ensemble 54 sont commandés pour se déplacer dans l'espace afin de suivre les trajectoires prescrites de manière à se trouver à la position prescrite à un instant donné ; et
- pour être cohérents par rapport à la cible aérienne 2 qu'ils simulent et éviter les risques de collision.

Par cette synchronisation (triple), les drones de l'ensemble 54 de drones sont commandés pour simuler, efficacement, une seule et même cible aérienne.

Par conséquent, le système 50 est apte à simuler une cible aérienne qui est simulée comme étant située à une distance élevée du système de surveillance 52 à partir de drones 3 volant à une distance bien plus réduite du système de surveillance 52.

A titre d'illustration non limitative :
- chaque drone 3 du système 50 peut être situé à une distance du système de surveillance 52, telle que la distance D1 sur la figure 7 pour le drone 3B, qui est comprise entre 50 mètres et 2 kilomètres ; et
- le système 50 peut simuler une cible aérienne qui est située (de façon virtuelle) à une distance du système de surveillance 52, telle que la distance D2 sur la figure 7 pour la cible aérienne 2A, qui est comprise entre 1 kilomètre (ou, a minima, la distance entre le drone et le système de surveillance 52) et plusieurs centaines de kilomètres.

Sur les figures 1 et 7 à 9 très schématiques, les drones et les cibles aériennes ainsi que leurs distances par rapport au système de surveillance 52, ne sont pas représentées à la même échelle pour des raisons de clarté de ces figures.

Lors de l'étape E2 de réalisation de la mission, le calculateur 7 de chaque drone 3 utilise donc la trajectoire (ou trajectoire prescrite) déterminée en préparation de mission pour envoyer des ordres aux moyens 5 afin qu'ils fassent voler le drone 3 le plus proche possible de cette trajectoire prescrite.

Lors de l'étape E2 de réalisation de la mission, un contrôle de la mission est réalisé (à la sous-étape E2A de contrôle de la mission) notamment à partir du sol à l'aide de l'unité 28 de contrôle de mission. Ce contrôle de mission permet notamment de détecter lorsque le drone s'écarte de la trajectoire prescrite (qu'il doit suivre).

Dans ce cas, la trajectoire du drone est corrigée (en temps réel) par le dispositif de modification de trajectoire 36, 37 pour que le drone revienne sur la trajectoire prescrite et la suive de nouveau.

Dans l'exemple simplifié de la figure 7, le système 50 comporte un seul ensemble 54 comprenant deux drones 3A et 3B.

Dans le cadre de la présente invention, le système 50 peut comprendre une pluralité d'ensembles 54 (dont chacun est destiné à simuler une cible aérienne particulière), et notamment, parmi eux, un ou plusieurs ensembles 54 qui comportent plus de deux drones.

Ainsi, dans un mode de réalisation particulier, représenté à titre de simple illustration non limitative sur la figure 8, pour simuler une même cible aérienne 2B, le système 50 comprend, en plus d'un drone 3C équipé d'un générateur de signal d'un second type, en l'occurrence d'un générateur de signal infrarouge 55, et d'un drone 3D équipé d'un générateur de signal d'un premier type, en l'occurrence d'un dispositif 4 de génération de signal, deux drones supplémentaires équipés chacun d'un générateur de signal, en l'occurrence un drone 3F équipé d'un générateur de signal infrarouge 55 et un drone 3E équipé d'un dispositif 4 de génération de signal.

Dans ce mode de réalisation particulier, les drones 3C, 3D, 3E et 3F de l'ensemble 54 sont synchronisés pour simuler la cible aérienne 2B.

Dans l'exemple particulier de la figure 8, le système 50 est ainsi en mesure de stimuler quatre senseurs du système de surveillance 52 (à savoir deux dispositifs d'interrogation 10 et deux imageurs infrarouges 57). Il est également envisageable que le ou les drones supplémentaires soient équipés chacun d'un générateur de signal d'un type autre que les types de ceux des drones 3C et 3D. Sur la figure 4, les liaisons 40 qui existent entre les différents drones 3C, 3D, 3E et 3F de l'ensemble 54 ne sont pas représentées pour des raisons de simplification du dessin.

Par ailleurs, dans un autre mode de réalisation particulier, représenté sur la figure 9, le système 50 comprend à la fois :
- un ensemble 54A de drones comprenant des drones 3G et 3H qui sont destinés à simuler une même cible aérienne 2C, le drone 3G étant équipé d'un générateur de signal infrarouge 55 et le drone 3H étant équipé d'un dispositif 4 de génération de signal ; et
- un ensemble 54B de drones comprenant des drones 3I et 3J qui sont destinés à simuler une même cible aérienne 2D, le drone 3I étant équipé d'un générateur de signal infrarouge 55 et le drone 3J étant équipé d'un dispositif 4 de génération de signal.

Dans ce mode de réalisation particulier, les drones 3G et 3H de l'ensemble 54A sont synchronisés pour simuler la cible aérienne 2C et les drones 3I et 3J de l'ensemble 54B sont synchronisés pour simuler la cible aérienne 2D.

Le système 50 est ainsi en mesure de simuler simultanément deux cibles aériennes 2C et 2D différentes. Sur l'exemple de la figure 9, les cibles aériennes 2C et 2D sont représentées sous forme d'avion. Bien entendu, les cibles aériennes 2C et 2D peuvent correspondre à deux engins volants de types différents.

Plus généralement, le système 50 est en mesure de simuler simultanément plus de deux cibles aériennes et chaque ensemble de drones peut comporter deux drones ou plus de deux drones, avec pour chaque ensemble de drones deux types différents ou plus de deux types différents de générateurs de signal.

Dans le cadre de la présente invention, les senseurs du système 50 peuvent être installés à poste fixe au sol. Ils peuvent également être montés sur un engin mobile, par exemple un engin terrestre, un navire ou un engin volant statique tel qu'un ballon attaché au sol par un fil.

Dans un mode de réalisation préféré, le système de surveillance 52 et le système d'arme 53 (qui comprend le système de surveillance 52) sont installés au sol (non représenté) et représentent des systèmes (de défense) sol-air.

Dans une première variante de réalisation, le système de surveillance 52 et le système d'arme 53 comprenant le système de surveillance 52 peuvent être installés (ou montés) sur un ou plusieurs navires (non représentés) et représenter des systèmes (de défense) mer-air.

En outre, dans une seconde variante de réalisation, par exemple au niveau d'un port, une partie du système de surveillance 52 et/ou du système d'arme 53 peut être installée au sol (non représenté) et le reste du système de surveillance 52 et/ou du système d'arme 53 peut être installé sur un ou des navires (non représentés).

Le système 50, tel que décrit ci-dessus, présente de très nombreux avantages. En particulier, ce système 50 est en mesure :
- de simuler, simultanément, de nombreuses cibles aériennes ;
- de simuler une même cible aérienne pour stimuler simultanément une pluralité de senseurs et plus particulièrement des senseurs de types différents ;
- de simuler tout type des cibles aériennes (ou engins volants), telles que par exemple un avion, un hélicoptère, un drone, un missile, ..., ou même des navires (qui évoluent à vitesse faible et à une hauteur proche de 0 mètre) ; et
- de simuler des cibles aériennes volant suivant tout type de trajectoire.

Le système de test 51 est ainsi en mesure de tester la chaîne complète du système d'arme 53, depuis la détection jusqu'à l'engagement (hors missile en vol), et ainsi au moins l'une des caractéristiques suivantes :
- la capacité de surveillance, de détection et de suivi de senseurs ;
- le bon comportement des algorithmes du système d'arme qui effectue la fusion de données, le traitement des données pour l'évaluation de la menace, le plan d'engagement, .... ; et
- la chaîne d'engagement avec le bon fonctionnement des algorithmes et des senseurs pendant cette phase.

Le système 50 et/ou le système de test 51 peuvent être utilisés dans de nombreuses applications différentes, et en particulier :
- pour la formation, notamment d'opérateurs du système de surveillance 52 et/ou du système d'arme 53 ;
- pour l'entraînement, notamment d'opérateurs du système de surveillance 52 et/ou du système d'arme 53 ;
- pour la calibration du système de surveillance 52 et/ou du système d'arme 53 ;
- pour des essais du système de surveillance 52 et/ou du système d'arme 53 ;
- pour la validation du système de surveillance 52 et/ou du système d'arme 53 ; et
- pour une démonstration.

## Revendications

1. Système de simulation d'au moins une cible aérienne, ledit système (50) de simulation comportant au moins :
- un drone (3) équipé d'un dispositif (4) de génération de signal apte à émettre un signal coopératif simulé (S2) qui représente un signal censé être émis par la cible aérienne (2) à simuler ;
- au moins un drone supplémentaire équipé d'un générateur de signal (4, 55) apte à émettre un signal représentatif de la cible aérienne (2A à 2D) à simuler, ledit drone et le ou les drones supplémentaires formant un ensemble (54) de drones ; et
- un dispositif de synchronisation (58) configuré pour synchroniser tous les drones (3) dudit ensemble (54) de drones afin qu'ils simulent la même cible aérienne (2A à 2D).

2. Système selon la revendication 1,
**caractérisé en ce que** le dispositif (4) de génération de signal est configuré pour générer, comme signal coopératif simulé, un signal dit IFF simulé (S2) qui représente un signal d'identification ami censé être émis par la cible aérienne (2), et **en ce que** ledit dispositif (4) de génération de signal comporte au moins :
- un calculateur (7) configuré pour générer des commandes d'identification conformément à un scénario préétabli ; et
- une unité d'identification (8A, 8B) configurée pour recevoir une interrogation dite IFF (S1) et pour déterminer ledit signal IFF simulé (S2) en fonction de ladite interrogation IFF (S1) reçue et desdites commandes d'identification, ledit signal IFF simulé (S2) étant émis en réponse à ladite interrogation IFF (S1) reçue.

3. Système selon la revendication 2,
**caractérisé en ce que** l'unité d'identification (8A) est :
- un transpondeur d'identification (14) de type IFF ; ou
- une carte radiofréquence numérique (15) implémentant un protocole d'identification.

4. Système selon l'une quelconque des revendications précédentes, **caractérisé en ce que** le dispositif (4) de génération de signal comporte au moins l'un des éléments suivants :
- un dispositif d'émission/réception (12) configuré pour émettre un signal IFF simulé (S2) et/ou pour recevoir une interrogation IFF (S1) ;
- un simulateur de position (18) configuré pour recevoir des informations de position et de temps du calculateur (7) et pour générer des valeurs de position .

5. Système selon la revendication 4,
**caractérisé en ce que** le dispositif d'émission/réception (12) comporte au moins l'une des unités suivantes :
- une unité (16) configurée pour réaliser une atténuation d'une interrogation IFF (S1) reçue ;
- une unité (17) configurée pour réaliser une atténuation et/ou une amplification d'un signal IFF simulé (S2) et/ou pour générer un retard dans l'émission d'un signal IFF simulé (S2).

6. Système selon l'une quelconque des revendications précédentes, **caractérisé en ce que** le dispositif (4) de génération de signal comporte au moins l'un des éléments suivants :
- un dispositif d'émission/réception radar (44) configuré pour recevoir un signal radar (29) et/ou pour émettre une réponse radar simulée (30) ;
- une carte radiofréquence numérique auxiliaire (31) configurée pour déterminer une réponse radar simulée (30) en fonction d'un signal radar (29) reçu et de données reçues du calculateur (7), la réponse radar simulée (30) étant transmise au dispositif d'émission/réception radar (44) pour qu'il l'émette en réponse audit signal radar (29) reçu.

7. Système selon l'une quelconque des revendications précédentes, **caractérisé en ce qu'**il comporte un dispositif (24) de gestion de mission configuré pour pouvoir communiquer avec ledit drone (3), et **en ce que** le dispositif (24) de gestion de mission comprend au moins l'une des unités suivantes :
- au moins une unité (26) de préparation de mission ;
- au moins une unité (27) de réalisation de mission ;
- au moins une unité (28) de contrôle de mission.

8. Système selon l'une quelconque des revendications précédentes, **caractérisé en ce qu'**il comporte au moins l'un des dispositifs de modification de trajectoire (36, 37) suivants :
- un dispositif de modification de trajectoire (36) qui fait partie d'un dispositif (24) de gestion de mission et qui est configuré pour émettre des ordres de correction de trajectoire au drone (3), qui sont générés automatiquement et/ou par un opérateur ;
- un dispositif de modification de trajectoire (37) qui est monté sur le drone (3) et qui est configuré pour modifier la trajectoire dudit drone (3).

9. Système selon l'une quelconque des revendications précédentes, **caractérisé en ce que** le dispositif de synchronisation (58) est configuré pour synchroniser tous les drones (3) de l'ensemble (54) de drones, à la fois :
- en temps ;
- dans l'espace ; et
- pour qu'ils soient cohérents par rapport à la cible aérienne (2A à 2D) qu'ils simulent et éviter des risques de collision.

10. Système selon l'une quelconque des revendications précédentes, **caractérisé en ce que** le drone supplémentaire est équipé d'au moins l'un des types suivants de générateur de signal :
- un générateur de signal radiofréquence ;
- un générateur de signal infrarouge (55) ;
- un générateur de signal visible ;
- un dispositif (4) de génération de signal coopératif.

11. Système selon l'une quelconque des revendications précédentes, **caractérisé en ce qu'**il comprend une pluralité d'ensembles (54A, 54B) de drones, chacun desdits ensembles (54A, 54B) de drones étant configuré pour simuler une cible aérienne (2C, 2D) différente de celle simulée par le ou les autres ensembles (54A, 54B) de drones.

12. Système de test pour tester un système à tester, par exemple de surveillance, en particulier d'un système d'arme multi-senseur hétérogène,
- **caractérisé en ce qu'**il comprend ledit système à tester (52) et au moins un système (50) de simulation d'au moins une cible aérienne, selon l'une quelconque des revendications 1 à 11.
